(19) Europäisches Patentamt
European Patent Office
Office européen des brevets

(11) Veröffentlichungsnummer: **0 178 520**
**B1**

(12) # EUROPÄISCHE PATENTSCHRIFT

(45) Veröffentlichungstag der Patentschrift: **30.08.89**

(51) Int. Cl.⁴: **C 08 G 18/79**, C 08 G 18/16

(21) Anmeldenummer: **85112357.0**

(22) Anmeldetag: **30.09.85**

(54) **Verfahren zur Herstellung von Uretdiongruppen aufweisenden Verbindungen, die nach diesem Verfahren erhältlichen Verbindungen und ihre Verwendung bei der Herstellung von Polyurethankunststoffen.**

(30) Priorität: **13.10.84 DE 3437635**

(43) Veröffentlichungstag der Anmeldung: **23.04.86 Patentblatt 86/17**

(45) Bekanntmachung des Hinweises auf die Patenterteilung: **30.08.89 Patentblatt 89/35**

(84) Benannte Vertragsstaaten: **BE DE FR GB IT NL**

(56) Entgegenhaltungen:
**EP-A- 0 033 927**
**EP-A- 0 045 995**
**EP-A- 0 099 976**
**EP-A- 0 166 172**

(73) Patentinhaber: **BAYER AG**
**D-5090 Leverkusen 1 Bayerwerk (DE)**

(72) Erfinder: **Engbert, Theodor, Dr.**
**Goethestrasse 57c**
**D-4047 Dormagen (DE)**
Erfinder: **Fröhlich, Jürg, Dr.**
**Paffenlöh 38**
**D-5093 Burscheid (DE)**
Erfinder: **Kubitza, Werner, Dipl.-Ing.**
**Eduard-Spranger-Strasse 22**
**D-5090 Leverkusen 3 (DE)**
Erfinder: **Breidenbach, Peter, Dr.**
**Mobay Chemical Corporation Westbay Road**
**Baytown Texas 77520 (US)**
Erfinder: **Mennicken, Gerhard, Dr.**
**Am Wasserturm 16**
**D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

## Beschreibung

Die Erfindung betrifft ein verbessertes Verfahren zur Herstellung von Uretdiongruppen aufweisenden Verbindungen durch Dimerisierung zumindest eines Teils der Isocyanatgruppen von organischen Isocyanaten, insbesondere von organischen Polyisocyanaten mit aliphatisch gebundenen Isocyanatgruppen unter Verwendung von neuartigen Dimerisierungskatalysatoren, welche sowohl eine Katalysator- als auch eine Cokatalysator-Komponente aufweisen, die nach diesem Verfahren erhältlichen, Uretdiongruppen aufweisenden Verbindungen und die Verwendung der nach diesem Verfahren erhältlichen, Uretdiongruppen aufweisenden Verbindungen auf Basis von organischen Polyisocyanaten bei der Herstellung von Polyurethankunststoffen.

Während zur Dimerisierung von aromatischen Isocyanaten eine Reihe von Verfahren bekannt sind (siehe z. B. Saunders und Frisch, « Polyurethanes — Chemistry and Technology » Part I, 1962, S. 61 ff.), sind geeignete Verfahren zur Dimerisierung von Isocyanaten mit aliphatisch gebundenen Isocyanatgruppen bisher kaum beschrieben worden.

Das am längsten bekannte Verfahren, nach dem ausgehend von aliphatischen Isocyanaten Uretdiongruppen aufweisende Produkte erhalten werden, ist in der DE-OS 1 670 720 beschrieben. Bei diesem Verfahren, bei dem als Dimerisierungskatalysatoren Trialkylphosphine in relativ hohen Konzentrationen von bis zu 2 Gew.-% zum Einsatz kommen, liefert jedoch keine reinen Uretdione bzw. Isocyanatouretdione, sondern stets Gemische aus Uretdionen und Isocyanuraten.

Ein in jüngster Zeit bekannt gewordenes Verfahren zur Herstellung eines praktisch Isocyanurat-freien Isocyanato-uretdions auf Basis eines aliphatischen Isocyanats stellt das in der DE-AS 3 030 513 beschriebene Verfahren zur Dimerisierung des 3-Isocyanatomethyl-3,5,5-trimethylcyclohexylisocyanats (Isophorondiisocyanat) dar. Als Dimerisierungskatalysatoren kommen in diesem Verfahren die schon in der US-PS 3 290 288 als Dimerisierungskatalysatoren für aromatische Isocyanate beschriebenen Amide der phosphorigen Säure (Aminophosphine) zur Anwendung. Die auf diese Weise erhältlichen Isocyanatouretdione auf Basis des Isophorondiisocyanats sind zwar praktisch frei von Isocyanuraten, nachteilig ist jedoch auch bei diesem Verfahren, daß für eine ausreichend rasche Reaktion relativ hohe Katalysatormengen benötigt werden ; z. B. werden 2 Gew.-% Tris-(dimethylamino)-phosphin benötigt, um innerhalb von 10 bis 30 h einen 15 bis 20 %igen NCO-Umsatz zu erzielen.

Dieser Umstand beeinträchtigt nicht nur die Wirtschaftlichkeit des Verfahrens ; durch die hohe Katalysatorkonzentration und die lange Reaktionszeit wird auch die Qualität der Reaktionsprodukte in nachteiliger Weise beeinflußt.

Ein wesentlicher Nachteil des in der DE-AS 3 030 513 beschriebenen Dimerisierungsverfahrens ist darüber hinaus in der beschränkten Anwendbarkeit dieses Verfahrens zu sehen.

So versagt es z. B. bei dem Versuch, das 2-Methyl-1,5-diisocyanatopentan zu praktisch Isocyanuratfreien Produkten umzusetzen. Wie in der DE-OS 3 227 779 dargelegt, läßt sich das 2-Methyl-1,5-diisocyanatopentan (vorliegend im Gemisch mit bis zu 12 Gew.-% 2-Ethyl-1,4-diisocyanatobutan) in Anwesenheit von Tris-(dimethylamino)-phosphin auch unter sehr schonenden Bedingungen nur unter Inkaufnahme merklicher Anteile an Isocyanuraten dimerisieren.

Ferner versagt das in der DE-OS 3 030 513 zur selektiven Dimerisierung des Isophorondiisocyanats verwendete Verfahren auch bei dem Versuch, das 1,6-Diisocyanatohexan, das von größter technischer Bedeutung ist, praktisch isocyanuratfrei zu dimerisieren. Es werden stets Produkte mit einem mehr oder minder hohen Gehalt an Isocyanuraten erhalten. Beschrieben wird dieser Sachverhalt z. B. von M. I. Bakhitov u. a. (Vysokomol. Soedin., Ser. B (1981), 23 (9), S. 680-682 ; siehe auch Chemical Abstracts 96 : 20 504 c), die 1,6-Diisocyanatohexan in Anwesenheit von Tris-(diethylamino)-phosphin zu Isocyanurat- und Uretdiongruppen enthaltenden Oligomeren umsetzen (siehe auch SU-PS 907 014, Chemical Abstracts 97 : 24 371 a). Wie von M. I. Bakhitov u. a. darüber hinaus mitgeteilt wird, (Vysokomol Soedin., Ser. B (1983), 25 (11), S. 830-833 ; siehe auch Chemical Abstracts 100 : 86 171 z), werden auch n-Butylisocyanat und Phenylisocyanat bei der Behandlung mit Tris-(diethylamino)-phosphin zu Reaktionsprodukten umgesetzt, die stets beträchtliche Anteile an Isocyanuraten enthalten.

Für eine Reihe von Anwendungen von dimeren Isocyanaten ist die Anwesenheit von Isocyanuratgruppen unerwünscht, da Isocyanuratgruppen enthaltende Uretdione bzw. Isocyanato-uretdione nicht vollständig in die Ausgangsisocyanate rückspaltbar sind, was ihre Verwendbarkeit z. B. in den Fällen beeinträchtigt, in denen es auf die Reaktivierung der Isocyanatgruppen ankommt, und da Isocyanuratgruppen enthaltende Isocyanatouretdione darüber hinaus — bedingt durch ihre verzweigte Struktur — eine relativ hohe Viskosität aufweisen, was ihre Verwendbarkeit, insbesondere in lösungsmittelarmen Polyurethanlacken stark beschränkt.

Es war daher die Aufgabe der Erfindung, ein neues Verfahren zur Dimerisierung von organischen Isocyanaten zur Verfügung zu stellen, welches die Dimerisierung von organischen Isocyanaten in hoher Selektivität gestattet, und welches Dimerisierungsprodukte hoher Qualität, insbesondere in farblicher Hinsicht, liefert.

Überraschenderweise konnte diese Aufgabe durch die Verwendung der nachstehend näher beschriebenen Katalysator-Kombinationen als Dimerisierungskatalysatoren gelöst werden.

Gegenstand der Erfindung ist ein Verfahren zur Herstellung von Uretdiongruppen aufweisenden

Verbindungen durch Dimerisierung zumindest eines Teils der Isocyanatgruppen von organischen Isocyanaten in Gegenwart von Phosphor-Stickstoff-Bindungen aufweisenden Verbindungen als Dimerisierungskatalysatoren, dadurch gekennzeichnet, daß man die Umsetzung in Gegenwart von 0,1 bis 5 Gew.%, bezogen auf organisches Isocyanat, an H-aktiven organischen Verbindungen mit einem pKs-Wert von mindestens 6, welche mindestens ein an Sauerstoff, Schwefel oder Stickstoff gebundenes Wasserstoffatom aufweisen, als Cokatalysator durchführt, wobei als organische Isocyanate solche der Formel

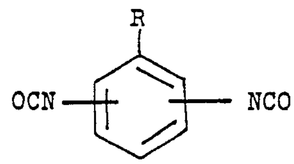

ausgenommen sind, in welcher R für einen gesättigten, aliphatischen Kohlenwasserstoffrest mit 8 bis 15 Kohlenstoffatomen steht.

Gegenstand der Erfindung sind auch die nach diesen Verfahren erhältlichen, Uretdiongruppen aufweisenden Verbindungen.

Gegenstand der Erfindung ist schließlich auch die Verwendung der nach dem erfindungsgemäßen Verfahren erhältlichen, Uretdiongruppen aufweisenden Verbindungen auf Basis von organischen Polyisocyanaten als Ausgangsmaterial bei der Herstellung von Polyurethankunststoffen nach dem Isocyanat-Polyadditionsverfahren.

Wesentliches Merkmal der Erfindung ist, daß man als Dimerisierungskatalysatoren Kombinationen aus bestimmten Katalysatoren des Standes der Technik mit bestimmten Cokatalysatoren verwendet, um hierdurch die Wirksamkeit und Selektivität der bekannten Katalysatoren zu verbessern.

Als Katalysatoren kommen beliebige, mindestens eine Phosphor-Stickstoff-Bindung aufweisende Verbindungen in Betracht, wie sie bislang bereits als Dimerisierungskatalysatoren empfohlen worden sind (vgl. z. B. US-PS 3 290 288). Gut geeignete Phosphor-Stickstoff-Bindungen aufweisende Verbindungen sind beispielsweise solche der allgemeinen Formel (I)

$$X_mP\ (NR_2)_{3-m} \qquad (I)$$

in welcher

X für —Cl, —OR oder —R steht,

R für gleiche oder verschiedene, gegebenenfalls olefinisch ungesättigte Alkyl-, Aryl-, Aralkyl- oder Cycloalkylreste steht, wobei die beiden mit dem Stickstoffatom verknüpften Reste auch zusammen mit dem Stickstoffatom einen gegebenenfalls noch weitere Heteroatome aufweisenden heterocyclischen Ring bilden können, und wobei die nicht mit dem Stickstoffatom verknüpften Reste R (gilt für X = —OR oder —R) gegebenenfalls Chlorsubstituenten aufweisen können, und

m für 0, 1 oder 2 steht.

Zu den bevorzugten Katalysatoren gehören insbesondere die entsprechenden Derivate der phosphorigen Säure (X = —OR, m = 0, 1 oder 2) und die entsprechenden Derivate von phosphonigen Säuren (X = —R, m = 1).

Zu den ganz besonders bevorzugten Katalysatoren gehören Verbindungen der allgemeinen Formel (I), für welche

m für 0 steht und

R für gleiche oder verschiedene Alkylreste mit jeweils 1 bis 4 Kohlenstoffatomen steht, oder für welche die beiden mit dem Stickstoffatom verknüpften Reste zusammen mit dem Stickstoffatom einen 3- bis 6-gliedrigen, gesättigten heterocyclischen Ring bilden, der gegebenenfalls eine Sauerstoffbrücke als Ringglied aufweisen kann, und in dem ansonsten Methylengruppen als weitere Ringglieder vorliegen.

Insbesondere werden diese Katalysatoren in Kombination mit ein- und/oder mehrwertigen aliphatischen oder cycloaliphatischen Alkoholen mit bis zu 10 Kohlenstoffatomen und/oder in situ aus solchen Alkoholen und einem Teil des Ausgangsisocyanats gebildeten Urethanen eingesetzt.

Beispiele für derartige, erfindungsgemäß als Katalysatoren geeignete Verbindungen sind die diesen Definitionen entsprechenden in US-PS 3 290 288 genannten Verbindungen. Tris-(dimethylamino)-phosphin (N,N,N',N',N'',N''-Hexamethyl-phosphorigsäuretriamid) und Tris-(diethylamino)-phosphin (N,N,N',N',N'',N''-Hexaethyl-phosphorigsäuretriamid) sind die ganz besonders bevorzugt einzusetzenden Katalysatoren.

Bei der Durchführung des erfindungsgemäßen Verfahrens werden die beispielhaft genannten Katalysatoren in Mengen von vorzugsweise 0,1 bis 1 Gew.-%, bezogen auf die Menge des eingesetzten Ausgangsisocyanats, eingesetzt.

Bei den erfindungsgemäß eingesetzten Cokatalysatoren handelt es sich um beliebige organische Verbindungen, die mindestens ein an Sauerstoff, Schwefel oder Stickstoff gebundenes Wasserstoffatom und einen pKs-Wert von mindestens 6 aufweisen. Zu den bevorzugten Cokatalysatoren gehören

Verbindungen der Verbindungsklassen der Alkohole, der Phenole, der primären und sekundären Amine, der Urethane, Harnstoffe, Amide, Allophanate, Biurete und Oxime und den gegebenenfalls durch eine Additionsreaktion derartiger Verbindungen mit einem Teil des Ausgangsisocyanats entstehenden Umsetzungsprodukte.

Besonders bevorzugt werden Alkohole, primäre oder sekundäre Amine oder Carbonsäureamide als erfindungsgemäße Cokatalysatoren eingesetzt, die sowohl als solche als auch in Form ihrer Additionsprodukte an die jeweils zum Einsatz gelangenden Ausgangsisooyanate (insbesondere in Form der entsprechenden Urethane oder Harnstoffe) die gewünschte cokatalytische Wirkung zeigen. Ganz besonders bevorzugt werden als Cokatalysatoren aliphatische oder cycloaliphatische Verbindungen eingesetzt, die ein Molekulargewicht von 32 bis 400 und mindestens eine alkoholische Hydroxylgruppe aufweisen.

Die erfindungsgemäß zum Einsatz gelangenden Cokatalysatoren können sowohl eine als auch mehrere der den genannten Verbindungsklassen zuzuordnenden funktionellen Gruppen sowie auch verschiedene funktionelle Gruppen nebeneinander enthalten. Auch Gemische verschiedener Cokatalysatoren können verwendet werden.

Vorzugsweise weisen die erfindungsgemäß zum Einsatz gelangenden Cokatalysatoren 1 bis 3 gleiche oder verschiedene funktionelle Gruppen der genannten Art auf.

Beispiele geeigneter, besonders bevorzugter Alkohole des Molekulargewichtsbereichs 32 bis 400, die mindestens eine alkoholische Hydroxylgruppe aufweisen müssen und daneben noch gegebenenfalls weitere funktionelle Gruppen der genannten Art aufweisen können, sind Methanol, Ethanol, Propanol, 2-Ethylhexanol, 2-Ethoxyethanol, Diethylenglykolmonomethylether, Cyclohexanol, Benzylalkohol, β-Phenylethanol, Ethylenglykol, 1,3-Butandiol, 1,2-Propandiol, 1,6-Hexandiol, 2,2-Dimethyl-1,3-propandiol, Di- und Polyethylenglykole des genannten Molekulargewichtsbereichs, Di- und Polypropylenglykole des genannten Molekulargewichtsbereichs, 1,3-Cyclohexandiol, 1,4-Bis-(Hydroxymethyl)-benzol, Glycerin, 1,2,6-Hexantriol, N-Methylethanolamin, Diethanolamin, Adipinsäure-bis-(hydroxyethyl)-ester, 2-Hydroxyessigsäure-N-ethylamid oder N-(2-Hydroxypropyl)-morpholin. Ganz besonders bevorzugt werden die beispielhaft genannten ein- oder mehrwertigen Alkohole, die keine weiteren funktionellen Gruppen aufweisen, eingesetzt.

Geeignete Cokatalysatoren aus der Gruppe der Phenole sind beispielsweise Phenol, die isomeren Kresole, 3-Ethyl-5-methylphenol, 4-Nonylphenol oder Dodecylphenol.

Geeignete Cokatalysatoren aus der Verbindungsklasse der Amine sind beispielsweise n-Butylamin, n-Hexylamin, 2-Ethylhexylamin, n-Dodecylamin, Allylamin, 3-Ethoxypropylamin, Diisopropylamin, Dibutylamin, Bis-(2-ethylhexyl)-amin, 1,4-Bis-(3-aminopropoxy)-butan, N-Ethylcyclohexylamin, N-Butylanilin, 2,5-Diamino-2,5-dimethylhexan, cyclische Amine wie Piperidin oder Pyrrolidin.

Geeignete Cokatalysatoren aus der Verbindungsklasse der Urethane sind beispielsweise Ethoxycarbonylaminoethan, Ethoxycarbonylaminohexan, Methoxycarbonylaminocyclohexan, Butoxycarbonylaminobenzol, 1,6-Bis-(ethoxycarbonylamino)-hexan, 1-(Ethoxycarbonylamino)-3,5,5-trimethyl-5-(ethoxycarbonylaminomethyl)-cyclohexan, 4,4'-Bis-(ethoxycarbonylamino)-dicyclohexylmethan, 1-Methyl-2,4-bis-(ethoxycarbonylamino)-benzol und andere aus organischen Isocyanaten und Alkoholen erhältliche Urethane, ferner Verbindungen wie Carbamidsäure-O-ethylester, Carbamidsäure-O-hexylester und 1,6-Hexandiol-bis-O,O-carbaminsäureester, ferner Urethangruppierungen enthaltende cyclische Verbindungen wie Oxazolidinon und Methyloxazolidinon.

Geeignete Cokatalysatoren aus der Verbindungsklasse der Harnstoffe sind beispielsweise Harnstoff, N-Methylharnstoff, N-Cyclohexylharnstoff, N-Phenylharnstoff, N,N-Dimethylharnstoff, aus Aminen und organischen Isocyanaten herstellbare, N,N'-substituierte Harnstoffe wie N,N'-Dimethylharnstoff, N-Methyl-N'-hexylharnstoff, N-Ethyl-N'-phenylharnstoff, N-Butyl-N'-dodecylharnstoff, 1,6-Hexamethylen-bis-(3-ethylharnstoff), 1,6-Hexamethylen-bis-(3,3-dibutylharnstoff), ferner Harnstoffgruppierungen enthaltende cyclische Verbindungen wie N,N'-Ethylenharnstoff und N-Methyl-N,N'-ethylenharnstoff.

Geeignete Cokatalysatoren aus der Verbindungsklasse der Amide sind beispielsweise Formamid, Acetamid, N-Methylacetamid, 2-Ethylhexansäureamid, N-Ethylcapronsäureamid, N-Butylbenzoesäureamid, cyclische Amide wie 2-Pyrrolidinon und ε-Caprolactam.

Geeignete Cokatalysatoren aus der Verbindungsklasse der Allophanate sind beispielsweise Allophansäure-O-ethylester sowie Allophanatgruppen enthaltende Verbindungen, wie sie in einer Additionsreaktion u. a. aus den beispielhaft genannten, Urethangruppierungen enthaltenden Verbindungen und organischen Isocyanaten entstehen.

Geeignete Cokatalysatoren aus der Verbindungsklasse der Biurete sind beispielsweise unsubstituiertes Biuret, 1,5-Dibutylbiuret, 1,5-Diphenylbiuret, 1-Phenyl-5-ethylbiuret sowie Biuretgruppen enthaltende Verbindungen, wie sie in einer Additionsreaktion u. a. aus den beispielhaft genannten Harnstoffgruppierungen enthaltenden Verbindungen und organischen Isocyanaten entstehen.

Geeignete Cokatalysatoren aus der Verbindungsklasse der Oxime sind beispielsweise Acetoxim, Acetonoxim, 2-Butanonoxim, Methylisobutylketonoxim.

Weitere als erfindungsgemäße Cokatalysatoren geeignete Verbindungen sind beispielsweise p-Aminophenol, N-Phenylacetamid, Morpholin, N-Aminomorpholin, oder Tris-(isocyanatohexyl)-biuret bzw. dessen Gemische mit seinen höheren Homologen. Derartige Biurete entstehen beispielsweise durch Umsetzung von 1,6-Diisocyanatohexan mit Wasser bei erhöhten Temperaturen über die Zwischenstufe

der entsprechenden Harnstoffe. Demzufolge ist es principiell auch möglich, beim erfindungsgemäßen Verfahren als potentiellen Cokatalysator Wasser einzusetzen, da dieses in situ mit dem Ausgangsisocyanat unter Bildung von Harnstoffen bzw. von Biureten reagiert, die ihrerseits cokatalytisch wirksam sind. Die Verwendung von Wasser anstelle der beispielhaft genannten Cokatalysatoren ist jedoch weniger bevorzugt, da, wie gesagt, erst das durch eine Additionsreaktion gebildete Derivat cokatalytisch wirksam wird, während die beispielhaft genannten Cokatalysatoren bereits selbst die erwünschte cokatalytische Wirkung entfalten.

Die cokatalytische Wirkung der beispielhaft genannten Cokatalysatoren hängt natürlich auch von der Konzentration der in den Cokatalysatoren vorliegenden funktionellen Gruppen ab. Man wird daher vergleichsweise hochmolekulare Verbindungen, die nur eine sehr geringe Konzentration an derartigen Gruppen aufweisen, weniger bevorzugt einsetzen.

Die Cokatalysatoren kommen beim erfindungsgemäßen Verfahren in einer Menge von 0,1 bis 5 Gew.-%, voruzgsweise 0,2 bis 1 Gew.-%, bezogen auf die Menge des Ausgangsisocyanates zum Einsatz. Die für den gewünschten, ohne Bildung von Isocyanuraten sich vollziehenden Reaktionsverlauf optimale Menge an Cokatalysator hängt von Art und Menge des Phosphor-Stickstoff-Bindungen enthaltenden Katalysators sowie der Art des zu dimerisierenden Isocyanates ab und kann durch orientierende Vorversuche leicht ermittelt werden.

Ausgangsmaterialien für das erfindungsgemäße Verfahren sind beliebige organische Mono- und Polyisocyanate, wie z. B. aliphatische, cycloaliphatische, araliphatische und/oder aromatische Isocyanate, wie sie beispielsweise in Houben-Weyl, Methoden der organischen Chemie, Band 14/2, Seite 61 bis 70 oder von W. Siefken in Annalen der Chemie 562, Seite 75 bis 136, beschrieben werden.

Geeignete Monoisocyanate sind beispielsweise solche des Molekulargewichtsbereichs 57 bis 400 wie Methylisocyanat, Ethylisocyanat, n-Butylisocyanat, Dodecylisocyanat, Stearylisocyanat, Cyclohexylisocyanat, 2-Chlorethylisocyanat, 6-Chlorhexylisocyanat, Benzylisocyanat, β-Phenylethylisocyanat, Phenylisocyanat oder 3-Chlorphenylisocyanat.

Geeignete Diisocyanate sind beispielsweise solche des Molekulargewichtsbereichs 140 bis 400 wie 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanato-cyclohexan, Isophorondiisocyanat, 1,3- und 1,4-Xylylendiisocyanat, 4,4'-Diisocyanatodicyclohexylmethan, 4-(4'-Methyl-3'-isocyanatobenzyl)-cyclohexylisocyanat, 2,4- und 2,6-Diisocyanatotoluol, 2,4'- und 4,4'-Diisocyanatodiphenylmethan, oder 1,5-Diisocyanatonaphthalin.

Geeignete höherfunktionelle Polyisocyanate sind beispielsweise solche mit einem Molekulargewicht von bis zu 1 000 wie 1,6,11-Triisocyanatoundecan, 1,5-Diisocyanato-hexansäure-(2-isocyanatoethyl)-ester, 4,4',4''-Triisocyanato-triphenylmethan, Tris-(4-isocyanatophenyl)-thiophosphat oder höherfunktionelle Polyisocyanate der Diphenylmethanreihe, die im allgemeinen im Gemisch mit den entsprechenden Diisocyanaten der bereits oben beispielhaft genannten Art vorliegen.

Beim erfindungsgemäßen Verfahren können beliebige Gemische der beispielhaft genannten mono- und polyfunktionellen Isocyanate eingesetzt werden. Vorzugsweise. werden beim erfindungsgemäßen Verfahren Polyisocyanate der beispielhaft genannten Art als Ausgangsmaterialien eingesetzt, insbesondere Diisocyanate mit aliphatisch gebundenen Isocyanatgruppen. Ganz besonders bevorzugt wird 1,6-Diisocyanatohexan als erfindungsgemäßes Ausgangsmaterial verwendet.

Das erfindungsgemäße Verfahren erfolgt im allgemeinen ohen Mitverwendung von Lösungsmitteln, obwohl die Verwendung von Lösungsmitteln nicht grundsätzlich ausgeschlossen ist. Geeignete Lösungsmittel sind solche, die gegenüber Isocyanatgruppen inert sind und eine schwache bis mittlere Polarität aufweisen wie beispielsweise Hexan, Toluol, Xylol, Chlorbenzol, Essigsäureethylester, Essigsäurebutylester, Ethylglykolacetat, Propylenglykolmonomethyletheracetat, Aceton, Methylisobutylketon, Methylenchlorid, N-Methylpyrrolidon oder beliebige Gemische derartiger Lösungsmittel.

Das erfindungsgemäße Verfahren kann prinzipiell nach zwei verschiedenen Ausführungsformen durchgeführt werden. Gemäß einer ersten Ausführungsform des erfindungsgemäßen Verfahrens werden alle im Ausgangsisocyanat vorliegenden Isocyanatgruppen zu Uretdiongruppen dimerisiert. Gemäß einer zweiten Ausführungsform des erfindungsgemäßen Verfahrens wird die Dimerisierungsreaktion bei einem Dimerisierungsgrad von unter 100 %, vorzugsweise von 10 bis 50 % durch Zugabe eines Katalysatorengifts abgebrochen.

Die erste Ausführungsform des erfindungsgemäßen Verfahrens wird vorzugsweise bei der erfindungsgemäßen Dimerisierung von Monoisocyanaten oder von Isocyanatgemischen mit einer unter zwei liegenden mittleren NCO-Funktionalität angewendet. Die zweite Ausführungsform des erfindungsgemäßen Verfahrens kommt im allgemeinen bei Verwendung von di- oder höherfunktionellen Polyisocyanaten zur Anwendung, so daß als Verfahrensprodukte Isocyanatgruppen aufweisende Uretdione entstehen, die gegebenenfalls von noch vorliegenden, nicht umgesetzten, überschüssigen Ausgangsisocyanaten durch deren Abdestillieren befreit werden können. Diese destillative Entfernung von nicht umgesetzten Ausgangsdiisocyanaten kann beispielsweise in Dünnschichtdestillationsapparaturen erfolgen, wobei die Destillationsbedingungen möglichst schonend gestaltet werden sollten, um eine Rückspaltung der vorliegenden Uretdiongruppen in die Ausgangsisocyanate zu vermeiden. In jenen Fällen, in denen die Uretdiongruppen aufweisenden Verfahrensprodukte in dem gegebenenfalls ein Lösungsmittel enthaltenden Reaktionsgemisch eine deutlich geringere Löslichkeit aufweisen als die Ausgangsisocyanate kann

die Abtrennung vom Ausgangsmaterial auch durch Kristallisation und nachfolgende Filtration erfolgen. Auch extraktive Verfahren können zur Abtrennung des überschüssigen Ausgansisocyanats angewandt werden.

Das erfindungsgemäße Verfahren wird im allgemeinen im Temperaturbereich von 0 bis 100 °C, vorzugsweise 10 bis 60 °C durchgeführt. Temperaturen von oberhalb 100 °C sind möglichst zu vermeiden, um die Bildung von unerwünschten Isocyanuraten auszuschließen.

Ein besonderer Vorzug des erfindungsgemäßen Verfahrens ist darin zu sehen, daß es bis herauf zu relativ hohen Temperaturen von z. B. 60 °C noch eine sehr sichere und selektive Umsetzung organischer Isocyanate zu Uretdionen bzw. Isocyanato-uretdionen gestattet. Selbst in den Fällen, in denen nach den bisher bekannten Verfahren des Standes der Technik eine praktisch isocyanuratfreie Dimerisierung gar nicht oder erst unterhalb einer Temperatur von 40 °C möglich ist, werden nach dem erfindungsgemäßen Verfahren noch bis herauf zu vorzugsweise 60 °C praktisch ausschließlich Uretdione gebildet. Hervorzuheben ist darüber hinaus die gute Reproduzierbarkeit des erfindungsgemäßen Verfahrens, auch in den zuvor genannten kritischen Fällen, in denen die bisher bekannten Verfahren versagen.

Die Möglichkeit, das erfindungsgemäße Verfahren bei einer relativ hohen Temperatur durchführen zu können, is mit einer höheren Produktionssicherheit während der Durchführung im technischen Maßstab verbunden und hat ferner den Vorteil, daß höhere Reaktionsgeschwindigkeiten und damit höhere Raum-Zeit-Ausbeuten realisiert werden können als es bisher möglich war. Beispielsweise betragen — ausgehend von einem aliphatischen Isocyanat wie dem 2-Methylpentan-1,5-diisocyanat — die für einen 20 %igen NCO-Umsatz üblicherweise benötigten Reaktionszeiten etwa 1 Stunde, sofern als Katalysator das Tris-(dimethylamino)-phosphin und als Cokatalysatoren Alkohole — jeweils in einer Menge von 1 Gew.-% — eingesetzt werden.

Gegenüber dem in DE-OS 3 227 779 beschriebenen alternativen Verfahren, bei dem das 2-Methylpentadiisocyanat in Abwesenheit der erfindungsgemäß zu verwendenden Cokatalysatoren und mit Rücksicht auf eine hohe Uretdion-Ausbeute bei Raumtemperatur durchgeführt wird, bedeutet dies eine Steigerung der Raum-Zeit-Ausbeute um das 2- bis 3-fache.

Die erfindungsgemäße Verfahrensweise, deren charakteristisches Merkmal in der Mitverwendung der genannten cokatalytisch wirkenden Verbindungen besteht, bewirkt einen gleichmäßigen und — wie erwähnt — im voruzgsweise angewendeten Temperaturbereich von 10 bis 60 °C einen im hohen Maße selektiven Reaktionsverlauf, wobei die umgesetzten Isocyanatgruppen in einer Selektivität von üblicherweise mehr als 90 %, vorzugsweise mehr als 95 % in Uretdiongruppen überführt werden. Da während der Umsetzung praktisch keine Isocyanuratgruppen entstehen, ist die Reaktion kaum exotherm und jederzeit gut kontrollierbar.

Im übrigen hat die Mitverwendung der erfindungswesentlichen Cokatalysatoren einen positiven Einfluß auf die Farbqualität der Reaktionsprodukte. Unter gleichen Bedingungen, jedoch in Abwesenheit der cokatalytisch wirkenden Verbindungen durchgeführte Umsetzungen ergeben stets deutlich dunkler gefärbte Produkte.

Wie bereits erwähnt, erfolgt die Durchführung des erfindungsgemäßen Verfahrens unter Verwendung von mindestens difunktionellen Isocyanaten vorzugsweise nach der zweiten Ausführungsform, bei welcher die Umsetzung bei einem Dimerisierungsgrad von vorzugsweise 10 bis 50 % durch Zugabe eines Katalysatorengifts abgebrochen wird. Unter « Dimerisierungsgrad » ist hierbei der Prozentsatz der im Ausgangsisocyanat vorliegenden Isocyanatgruppen zu verstehen, der in Uretdiongruppen überführt wird. Geeignete Katalysatorengifte sind beispielsweise stark saure Verbindungen wie Chloressigsäure, Trichloressigsäure, Trifluoressigsäure, Methansulfonsäure, Perfluorbutansulfonsäure, Phosphorsäure, saure Phosphorsäureester, gasförmige Chlorwasserstoffsäure und diese Säuren leicht abspaltende Verbindungen wie z. B. Carbamidsäurechloride. Andere geeignete Desaktivatoren sind z. B. Tosylisocyanat, Schwefel und alkylierend wirkende Verbindungen wie Methyljodid und Toluolsulfonsäuremethylester. Auch Säureanhydride wie Essigsäureanhydrid oder Bernsteinsäureanhydrid sind als Desaktivatoren verwendbar.

Generell sind alle Verbindungen als Desaktivatoren geeignet, die sich auch bei alleiniger Anwendung der Phosphor-Stickstoff-Bindungen enthaltenden Katalysatoren gemäß den bekannten Verfahren des Standes der Technik zur Abstoppung eignen. Solche Desaktivatoren sind z. B. in der DE-OS 1 670 720 und der DE-OS 1 934 763 genannt.

Auf die Desaktivierung des Katalysators kann — wie in der DE-OS 3 030 513 beschrieben — auch verzichtet werden, z. B. dann, wenn das Reaktionsgemisch bei Erreichen des gewünschten Umsetzungsgrades sofort destillativ aufgearbeitet wird und dabei Bedingungen gewählt werden, unter denen der Katalysator zusammen mit dem überschüssigen Ausgangsisocyanat abdestilliert. Diese Vorgehensweise hat jedoch den Nachteil, daß weitere, in unkontrollierter Weise ablaufende Reaktionen während und nach der Aufarbeitung wie z. B. weitere Dimerisierungen und/oder Trimerisierungen und/oder Umwandlungen von Uretdionen zu Isocyanuraten nicht sicher ausgeschlossen werden können.

Die beim erfindungsgemäßen Verfahren erhältlichen, gegebenenfalls vom überschüssigem Ausgangsisocyanat befreiten Verfahrensprodukte stellen bei Raumtemperatur teils feste, teils flüssige Produkte dar. Während aromatische Isocyanate, z. B. das 4-Isocyanatotoluol, das 2,4-Diisocyanatotoluol oder das 4,4′-Diisocyanatodiphenylmethan in der Regel feste Dimerisierungsprodukte liefern, werden ausgehend von aliphatischen Isocyanaten sowohl feste als auch flüssige Produdkte erhalten.

Im letzteren Falle zeichnen sich die nach dem erfindungsgemäßen Verfahren erhältlichen Produkte zum Teil durch eine außergewöhnliche niedrige Viskosität aus. Zum Beispiel werden ausgehend von 1,6-Diisocyanatohexan Produkte erhalten, die nach der destillativen Abtrennung von überschüssigem Ausgangsisocyanat bei NCO-Gehalten von 20 bis 22 Gew.-% Viskositäten von weniger als 100 mPas (25 °C) aufweisen.

Die beim erfindungsgemäßen Verfahren erhältlichen, gegebenenfalls vom überschüssigen Ausgangsisocyanat befreiten Verfahrensprodukte stellen wertvolle Zwischenprodukte zur Herstellung anderer, insbesondere hochmolekularer Stoffe dar.

Sc lassen sich die aus mehrfunktionellen aromatischen Isocyanaten herstellbaren Isocyanatouretdione, beispielsweise wie in der DE-PS 968 566 beschrieben, mit Hydroxy- und/oder Amingruppen enthaltenden Reaktionspartnern z. B. Polyhydroxypolyurethanen zu hitzehärtbaren Kunststoffmassen verarbeiten. Die in der Hitze spaltbaren Uretdiongruppierungen tragen hierbei wesentlich zur Aushärtung der vordem plastischen Kunststoffmasse bei.

Isocyanatouretdione auf Basis mehrfunktioneller aliphatischer Isocyanate eignen sich nach der Abtrennung vom überschüssigen monomeren Ausgangsisocyanat in hervorragender Weise zur Herstellung von lichtechten Ein- und Zweikomponenten-Polyurethanlacken. Dies gilt insbesondere auch für das besonders bevorzugte erfindungsgemäße Verfahrensprodukt auf Basis von 1,6-Diisocyanatohexan. Dieses läßt sich beispielsweise vorteilhaft als Reaktivverdünner für andere, höherviskose oder feste, NCO-Gruppen aufweisende Lackkomponenten oder als Polyisocyanat-Komponente in lösungsmittelfreien bzw.-armen Polyurethanlack-Systemen einsetzen.

Auf monofunktionellen Ausgangsisocyanaten basierende, erfindungsgemäße Uretdione stellen potentielle Monoisocyanate dar und können wie diese beispielsweise als Zwischenprodukte für die Herstellung von Pflanzenschutzmitteln eingesetzt werden. Gegenüber den ihnen zugrundeliegenden monomeren Isocyanaten weisen die erfindungsgemäß hergestellten dimeren Monoisocyanate den Vorteil eines erheblich niedrigeren Dampfdrucks auf.

Die nachfolgenden Beispiele dienen der weiteren Erläuterung der Erfindung. Alle Prozentangaben beziehen sich, soweit nichts anderes vermerkt, auf Gewichtsprozente.

## Beispiel 1

400 g 1,6-Diisocyanatohexan wurden unter Luftausschluß in einem 500 ml-Mehrhalskolben vorgelegt, auf 60 °C erhitzt und unter gutem Rühren zunächst mit 4 g Tetraethylenglykol und dann mit 4 g Tris-(dimethylamino)-phosphin versetzt. Die spontan einsetzende Reaktion war kaum exotherm, so daß eine Wasserkühlung nicht erforderlich war. Als nach insgesamt 1,5-stündigen Rühren bei 60 °C der NCO-Gehalt der Reaktionsmischung auf 41,5 % abgefallen war, wurde die weitere Umsetzung durch Zugabe von 1,88 g Trifluoressigsäure abgestoppt.

Das erhaltene Reaktionsprodukt war absolut klar und praktisch ungefärbt; sein NCO-Gehalt betrug 41,3 %. Anhand einer IR-spektroskopischen Untersuchung des Reaktionsproduktes wurde ein molares Verhältnis von Uretdion- zu Isocyanuratgruppen von 97 : 3 ermittelt.

## Vergleichsbeispiel 1a

Es wurde wie in Beispiel 1 verfahren, jedoch mit dem Unterschied, daß kein Tetraethylenglykol mitverwendet wurde.

Die nach der Katalysatorzugabe spontan einsetzende Reaktion war deutlich exothermer als in Beispiel 1, die Reaktionszeit bis zum Erreichen eines NCO-Gehaltes von 41,5 % betrug 50 min.

Das Reaktionsprodukt, das nach dem Abstoppen mit 1,88 g Trifluoressigsäure einen NCO-Gehalt von 41,2 % aufwies, war absolut klar und von hell- bis mittelgelber Farbe; das IR-spektroskopisch bestimmte molare Verhältnis von Uretdion- zu Isocyanuratgruppen betrug ca. 64 : 36.

## Beispiel 2

Es wurde wie in Beispiel 1 verfahren, die Reaktion jedoch bei einer Temperatur von 40 °C durchgeführt.

Nach einer Reaktionszeit von 4,5 h wurde die weitere Umsetzung bei einem NCO-Gehalt von 35 % durch Zugabe von 1,88 g Trifluoressigsäure abgebrochen.

Das erhaltene Reaktionsprodukt war absolut klar und praktisch farblos; die IR-spektroskopische Untersuchung ließ keine Isocyanuratgruppierungen erkennen (molares Verhältnis Uretdion- zu Isocyanuratgruppen > 99 : 1).

## Vergleichsbeispiel 2a

Es wurde wie in Beispiel 2 verfahren, jedoch kein Tetraethylenglykol mitverwendet.

Nach einer Reaktionszeit von insgesamt 4,75 h, als der NCO-Gehalt der Reaktionsmischung auf 34 % gefallen war, wurde die weitere Umsetzung durch Zugabe von 1,88 g Trifluoressigsäure abgestoppt.

Das resultierende klare Reaktionsprodukt besaß eine deutlich gelbe Farbe und wies, wie das IR-Spektrum zeigte, merkliche Anteile an Isocyanuratgruppierungen auf (molares Verhältnis Uretdion- zu Isocyanuratgruppen = 81 : 19).

Beispiele 3 bis 20

In den Beispielen 3 bis 20 wurde wie im Beispiel 2 beschrieben verfahren. Anstelle des Tetraethylenglykols kamen jedoch andere cokatalytisch wirkende Zusätze zum Einsatz.

Art und Menge dieser Zusätze sowie die zum Reaktionsablauf und zu den jeweiligen Reaktionsprodukten ermittelten übrigen Daten sind der nachfolgenden Tabelle I zu entnehmen.

(Siehe Tabelle 1 Seite 9 f.)

Beispiel 21

400 g 1,6-Diisocyanatohexan wurden unter Luftausschluß in einem 500 ml-Mehrhalskolben vorgelegt, auf 40 °C erhitzt und unter intensivem Rühren zunächst mit 4 g 1,3-Butandiol und dann mit 6 g Tris-(diethylamino)-phosphin versetzt.

Im Verlauf der nächsten 2,5 h, in denen die Reaktionsmischung bei einer Temperatur von 40 °C gerührt wurde, fiel der NCO-Gehalt der Reaktionsmischung bei kaum merklicher Wärmetönung auf einen Wert von 42,3 % ab. Bei Erreichen dieses Wertes wurde die weitere Umsetzung durch Zugabe von 5,2 g 2-Ethylhexansäure gestoppt. Das resultierende klare Reaktionsprodukt war schwach gelb gefärbt (Jodfarbzahl : 1-2) und wies laut IR-spektroskopischer Untersuchung keine Isocyanuratgruppen auf.

Vergleichsbeispiel 21 a

Es wurde wie in Beispiel 21 verfahren, jedoch kein 1,3-Butandiol mitverwendet.

Nach einer Reaktionszeit von insgesamt 5 h, als der NCO-Gehalt der Reaktionsmischung auf einen Wert von 43,7 abgefallen war, wurde die weitere Reaktion durch Zugabe von 5,2 g 2-Ethylhexansäure abgestoppt. Das so erhaltene Reaktionsprodukt war absolut klar und von intensiv gelber Farbe (Jodzahl : 4-5) ; das molare Verhältnis von Uretdion- zu Isocyanuratgruppierungen betrug laut IR-spektroskopischer Untersuchung 97 : 3.

Beispiel 22

Es wurde wie in Beispiel 21 verfahren, jedoch mit dem Unterschied, daß anstelle des 1,3-Butandiols eine gleich große Menge Neopentylglykol zum Einsatz kam und die Reaktionstemperatur 60 °C betrug.

Die Abstoppung erfolgt nach einer Reaktionszeit von 3,5 h bei Erreichen eines NCO-Gehaltes von 42,7 %. Das Reaktionsprodukt war absolut klar, von hell- bis mittelgelber Farbe und wies laut IR-spektroskopischer Untersuchung Uretdion- und Isocyanuratgruppierungen im molaren Verhältnis von 98 : 2 auf.

Vergleichsbeispiel 22 a

Es wurde wie in Beispiel 22 verfahren, jedoch kein Neopentylglykol mitverwendet.

Die Abstoppung erfolgte nach 3,5 h bei Erreichen eines NCO-Gehaltes von 42,1 %. Das erhaltene klare Reaktionsprodukt war von bräunlichgelber Farbe und wies laut IR-spektroskopischer Untersuchung Uretdion- und Isocyanuratgruppierungen im molaren Verhältnis von 94 : 6 auf.

Beispiel 23

In einem mit Stickstoff gespülten 6 1-Kolben wurden 5 000 g 1,6-Diisocyanatohexan vorgelegt, auf 40 °C erhitzt und unter intensivem Rühren zunächst mit 50 g Tetraethylenglykol und dann mit 25 g Tris (dimethylamino)-phosphin versetzt. Man ließ bei einer Temperatur von 40 °C 3,5 h rühren, bis der NCO-Gehalt der Reaktionsmischung auf 40 % abgefallen war. Die weitere Reaktion wurde durch Zugabe von 50 g Phosphorsäuredi-(2-ethylhexyl)-ester und anschließendes 30-minütiges Nachrühren bei 40 °C unterbunden.

Das so erhaltene Produkt, das laut IR-spektroskopischer Untersuchung keine Isocyanuratgruppen aufwies, besaß einen NCO-Gehalt von 39,6 % und eine nach DIN 6162 bestimmte Jodfarbzahl von deutlich unter 1.

4 840 g dieses Produktes wurden in einem herkömmlichen Dünnschichtverdampfer bei einem Druck

Tabelle 1

| Nr. des Versuchsbeispiels | verwendeter Cokatalysator | Menge des Cokatalysators a) %, bez. auf Ansatz | Reaktionsdauer in h | NCO-Gehalt des abgestoppten Produktes | Farbe des abgestoppten Produktes | molares Verhältnis von Uretdion zu Isocyanurat b) |
|---|---|---|---|---|---|---|
| 3 | Ethanol | 1,0 | 2,0 | 40,3 % | fast farblos | >99 : 1 |
| 4 | Neopentylglykol | 1,0 | 1,5 | 41,2 % | fast farblos | >99 : 1 |
| 5 | 1,3-Butandiol | 1,0 | 1,5 | 40,7 % | fast farblos | >99 : 1 |
| 6 | Phenyl-$NHCO_2ET$ | 2,5 | 1,75 | 41,0 % | hellgelb | 98 : 2 |
| 7 | N-Methyldiethanolamin | 1,0 | 1,75 | 39,7 % | hellgelb | >99 : 1 |
| 8 | Phenol | 1,0 | 1,75 | 39,3 % | fast farblos | 96 : 4 |
| 9 | N,N'-Dimethylharnstoff | 1,0 | 1,0 | 42,2 % | hellgelb | 95 : 5 |
| 10 | (R) Desmodur N c) | 1,0 | 2,0 | 40,1 % | hellgelb | 97 : 3 |
| 11 | N-Methylethanolamin | 1,0 | 2,0 | 40,0 % | fast farblos | >99 : 1 |
| 12 | ε-Caprolactam | 1,0 | 2,5 | 39,8 % | hellgelb | >99 : 1 |
| 13 | 2-Butanonoxim | 1,0 | 2,1 | 39,7 % | mittelgelb | 98 : 2 |
| 14 | Trichlorethanol | 1,0 | 2,5 | 40,0 % | intensiv gelb | 97 : 3 |
| 15 | Diethylamin | 1,0 | 2,5 | 38,5 % | hellgelb | 98 : 2 |
| 16 | Glycerin | 1,0 | 2,2 | 39,5 % | fast farblos | >99 : 1 |
| 17 | Toluidin | 1,0 | 1,5 | 39,6 % | orange-gelb | >99 : 1 |
| 18 | Dodecylamin | 1,0 | 2,0 | 40,1 % | hellgelb | 95 : 5 |
| 19 | Carbamidsäure-O-ethylester | 1,0 | 5,0 | 42,5 % | mittelgelb | 97 : 3 |
| 20 | t-Butanol | 1,0 | 2,5 | 39,7 % | hellgelb | >99 : 1 |

a) bezogen auf die eingesetzte Menge Isocyanat
b) IR-spektroskopisch bestimmt
c) Handelsprodukt der BAYER AG ; Isocyanatobiuret auf Basis von 1,6-Diisocyanatohexan, lösungsmittelfrei

von 0,1 bis 0,2 mbar und einer Manteltemperatur von 160 °C weitgehend vom überschüssigen monomeren Ausgangsmaterial befreit. Es resultierten 3 180 g eines farblosen Destillates und 1 630 g eines schwach gelb gefärbten Sumpfproduktes, das folgende analytische Daten aufwies :

| | |
|---|---|
| Viskosität bei 25 °C : | 60 mPas |
| Jodfarbzahl nach DIN 6162 : | 1-2 |
| NCO-Gehalt : | 21,1 % |
| Monomerengehalt : | <1 % |

Beispiel 24

400 g 3-Isocyanatomethyl-3,5,5-trimethylcyclohexylisocyanat wurden unter Luftausschluß in einem 500 ml-Mehrhalskolben vorgelegt, auf 40 °C erhitzt und unter intensivem Rühren zunächst mit 4,0 g 1,3-Butandiol und dan mit 4,0 g Tris-(diethylamino)-phosphin versetzt.

Als der NCO-Gehalt der Reaktionsmischung nach einer Reaktionszeit von insgesamt 7 h, in der die Reaktionsmischung zunächst für 3 h bei 40 °C und dann 4 h bei 60 °C gerührt wurde, auf einen Wert von 33,5 % abgefallen war, wurde die weitere Reaktion durch Zugabe von 8,0 g Phosphorsäure-di-(2-ethylhexylester) abgestoppt. Das erhaltene Reaktionsprodukt war absolut klar und praktisch farblos (Jodfarbzahl nach DIN 6162 : < 1), und wies laut IR-spektroskopischer Untersuchung keine Isocyanuratgruppierungen auf. Sein NCO-Gehalt betrug 33,5 %.

Vergleichsbeispiel 24a

Es wurde wie in Beispiel 24 verfahren, jedoch mit dem Unterschied, daß kein 1,3-Butandiol mitverwendet wurde. Das nach Abstoppung erhaltene Reaktionsprodukt das einen NCO-Gehalt von 33,7 % aufwies und laut IR-spektrokopischer Untersuchung keine Isocyanuratgruppierungen aufwies, war absolut klar, wies jedoch eine deutlich gelbere Farbe auf als das im erfindungsgemäßen Beispiel 25 erhaltene Produkt (Jodfarbzahl nach DIN 6162 : 1-2).

Beispiel 25

150 g n-Butylisocyanat wurden bei Raumtemperatur zunächst mit 1,5 g 1,3-Butandiol und dann mit 3,0 g Tris-(dimethylamino)-phosphin versetzt. Das Reaktionsgemisch wurde sodann auf 40 °C erhitzt und anschließend bei gleicher Temperatur 7 h gerührt. Um die weitere Reaktion abzustoppen, wurden 6,0 g Phosphorsäure-di-(2-ethylhexylester) zugegeben. Die erhaltene, leicht gelb gefärbte Reaktionsmischung besaß einen NCO-Gehalt von 37,0 % und wies laut IR-spektroskopischer Untersuchung keinerlei Isocyanuratgruppierungen auf.

Vergleichsbeispiel 25a

Es wurde wie in Beispiel 25 verfahren, jedoch mit dem Unterschied, daß kein 1,3-Butandiol mitverwendet wurde. Das nach Abstoppung erhaltene, intensiv gelb gefärbte Reaktionsprodukt besaß einen NCO-Gehalt von 37,5 % und wies laut IR-spektroskopischer Untersuchung Uretdion- und Isocyanuratgruppierungen im molaren Verhältnis von 60 : 40 auf.

Beispiel 26

Zu einer Lösung von 174 g 2,4'-Diisocyanatotoluol in 147 ml n-Hexan wurden bei Raumtemperatur zunächst 5,0 g 2-Ethylhexanol und dann 0,5 g Tris-(dimethylamino)-phosphin hinzugegeben. Nach Erhitzen auf 40 °C wurde die Reaktionsmischung noch 30 Minuten gerührt und dann mit 1,5 g Phosphorsäure-di-(2-ethylhexylester) versetzt. Als Produkt wurde ein praktisch farbloser Kristallbrei erhalten, der laut IR-spektroskopischer Untersuchung keine Isocyanuratgruppierungen enthaltende Verbindung aufwies.

Vergleichsbeispiel 26a

Es wurde wie in Beispiel 26 verfahren, jedoch mit dem Unterschied, daß kein 2-Ethylhexanol mitverwendet wurde. Das nach dem Abstoppen erhaltene Produkt, das von ähnlicher Konsistenz wie das in Beispiel 27 beschriebene war, wies laut IR-spektroskopischer Untersuchung keine Isocyanuratgruppierungen auf, war aber stark gelb gefärbt.

Beispiel 27

200 g eines zu 92 % aus 2-Methyl-1,5-pentandiisocyanat und 8 % aus 2-Ethyl-1,4-butandiisocyanat bestehenden Isocyanatgemisches wurden unter Luftausschluß in einem 500 ml-Kolben vorgelegt und

nacheinander mit 2,0 g 1,3-Butandiol und 1,0 g Tris-(dimethylamino)-phosphin versetzt.

Das Reaktionsgemisch wurde sodann auf 40 °C erhitzt und 1,5 h bei dieser Temperatur gerührt, bis der NCO-Gehalt des Reaktionsgemisches auf 40,4 % abgefallen war. Zur Abstoppung wurden 1,85 g Stearinsäurechlorid hinzugegeben und noch weitere 2 h bei 40 °C gerührt.

Das erhaltene Reaktionsprodukt, das einen NCO-Gehalt von 40,2 % aufwies, war absolut klar und von mittelgelber Farbe (Jodfarbzahl nach DIN 6162 : 3-4). Das Verhältnis von Uretdion- zu Isocyanuratgruppierungen betrug lt. IR-spektroskopischer Untersuchung 96 : 4.

Vergleichsbeispiel 27a

Es wurde wie in Beispiel 27 verfahren, jedoch mit dem Unterschied, daß man kein 1,3-Butandiol mitverwendete. Nach einer Reaktionszeit von 3,0 h war der NCO-Gehalt der Reaktionsmischung auf einen Wert von 40 % abgefallen und es wurde wie in Beispiel 27 beschrieben abgestoppt.

Das erhaltene Reaktionsprodukt wies einen NCO-Gehalt von 39,3 % auf, war absolut klar, jedoch von deutlich dunklerer Färbung als das in Beispiel 27 erhaltene (Jodfarbzahl nach DIN 6162 : 7-8). Das Verhältnis von Uretdion- zu Isocyanuratgruppierungen betrug lt. IR-spektroskopischer Untersuchung 85 : 15.

## Patentansprüche

1. Verfahren zur Herstellung von Uretdiongruppen aufweisenden Verbindungen durch Dimerisierung zumindest eines Teils der Isocyanatgruppen von organischen Isocyanaten in Gegenwart von Phosphor-Stickstoff-Bindungen aufweisenden Verbindungen als Dimerisierungskatalysatoren, dadurch gekennzeichnet, daß man die Umsetzung in Gegenwart von 0,1 bis 5 Gew.%, bezogen auf organisches Isocyanat, an H-aktiven organischen Verbindungen mit einem pKs-Wert von mindestens 6, welche mindestens ein an Sauerstoff, Schwefel oder Stickstoff gebundenes Wasserstoffatom aufweisen, als Cokatalysator durchführt, wobei als organische Isocyanate solche der Formel

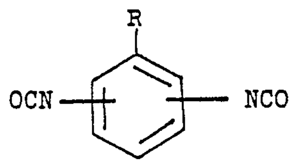

ausgenommen sind, in welcher R für einen gesättigten, aliphatischen Kohlenwasserstoffrest mit 8 bis 15 Kohlenstoffatomen steht.

2. Verfahren gemäß Anspruch 1, dadurch gekennzeichnet, daß man als Cokatalysatoren Verbindungen verwendet, die aus der Gruppe bestehend aus Alkoholen, Phenolen, primären Aminen, sekundären Aminen, Amiden, Oximen, Additionsverbindungen derartiger Verbindungen an organische Isocyanate und Gemischen derartiger Verbindungen und/oder Umsetzungsprodukte ausgewählt sind.

3. Verfahren gemäß Anspruch 1 und 2, dadurch gekennzeichnet, daß man als zumindest teilweise zu dimerisierende organische Isocyanate organische Polyisocyanate verwendet.

4. Verfahren gemäß Anspruch 1 bis 3, dadurch gekennzeichnet, daß man als zumindest teilweise zu dimerisierende organische Isocyanate Diisocyanate mit aliphatisch gebundenen Isocyanatgruppen verwendet.

5. Verfahren gemäß Anspruch 1 bis 4, dadurch gekennzeichnet, daß man als zumindest teilweise zu dimerisierendes organisches Isocyanat 1,6-Diisocyanatohexan verwendet.

6. Verfahren gemäß Anspruch 1 bis 5, dadurch gekennzeichnet, daß man als zumindest teilweise zu dimerisierende organische Isocyanate Polyisocyanate verwendet und die Dimerisierungsreaktion nach Erreichen eines Dimerisierungsgrades von 10 bis 50 % durch Zugabe eines Katalysatorengifts abbricht und gegebenenfalls das nach Abbruch der Dimerisierungsreaktion im Reaktionsgemisch noch vorliegende, überschüssige, nicht umgesetzte Ausgangsisocyanat destillativ aus dem Reaktionsgemisch entfernt.

7. Verfahren gemäß Anspruch 1 bis 6, dadurch gekennzeichnet, daß man als Katalysatoren Verbindungen der allgemeinen Formel

$$P(NR_2)_3$$

in welcher die Reste R für gleiche oder verschiedene aliphatische Kohlenwasserstoffreste mit 1 bis 4 Kohlenstoffatomen stehen oder in welcher die beiden Reste R zusammen mit dem Stickstoffatom einen heterocyclischen Ring mit 3 bis 6 Ringgliedern bilden, und als Cokatalysatoren ein- und/oder mehrwertige aliphatische oder cycloaliphatische Alkohole mit bis zu 10 Kohlenstoffatomen und/oder in situ aus derartigen Alkoholen und einem Teil des Ausgangsisocyanats gebildete Urethane, verwendet.

8. Verfahren gemäß Anspruch 1 bis 7, dadurch gekennzeichnet, daß man die Umsetzung im

Temperaturbereich von 10 bis 60 °C durchführt.

9. Gemäß Anspruch 1 bis 8 erhältliche Uretdiongruppen aufweisende Verbindungen.

10. Verwendung der gemäß Anspruch 1 bis 8 erhältlichen, Uretdiongruppen aufweisenden Verbindungen auf Basis von organischen Polyisocyanaten als Ausgangsmaterial bei der Herstellung von Polyurethankunststoffen nach dem Isocyanat-Polyadditionsverfahren.

## Claims

1. A process for the production of compounds containing uretdione groups by at least partial dimerization of the isocyanate groups of organic isocyanates in the presence of compounds containing phosphorus-nitrogen bonds as the dimerization catalysts, characterized in that the reaction is carried out in the presence of 0.1 to 5 % by weight, based on organic isocyanate, of H-active organic compounds having a pKs value of at least 6, which contain at least one hydrogen atom attached to oxygen, sulfur or nitrogen, as co-catalyst, organic isocyanates corresponding to the formula

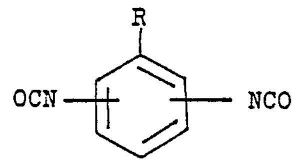

in which R is a saturated aliphatic hydrocarbon radical containing 8 to 15 carbon atoms being excluded as the organic isocyanates.

2. A process as claimed in claim 1, characterized in that compounds selected from the group consisting of alcohols, phenols, primary amines, secondary amines, amides, oximes, adducts of such compounds with organic isocyanates and mixtures of such compounds and/or reaction products are used as the co-catalysts.

3. A process as claimed in claims 1 and 2, characterized in that organic polyisocyanates are used as the organic isocyanates to be at least partly dimerized.

4. A process as claimed in claims 1 to 3, characterized in that diisocyanates containing aliphatically bound isocyanate groups are used as the organic isocyanates to be at least partly dimerized.

5. A process as claimed in claims 1 to 4, characterized in that 1,6-diisocyanatohexane is used as the organic isocyanate to be at least partly dimerized.

6. A process as claimed in claims 1 to 5, characterized in that polyisocyanates are used as the organic isocyanates to be at least partly dimerized and the dimerization reaction is termined by addition of a catalyst poison after the degree of dimerization has reached 10 to 50 % and the excess, unreacted starting isocyanate, if any, still present in the reaction mixture after termination of the dimerization reaction is removed from the reaction mixture by distillation.

7. A process as claimed in claims 1 to 6, characterized in that compounds corresponding to the following general formula

$$P(NR_2)_3$$

in which the substituents R may be the same or different and are aliphatic hydrocarbon radicals containing from 1 to 4 carbon atoms and in which the two substituents R may form together with the nitrogen atom a heterocyclic ring containing 3 to 6 ring members, are used as catalysts and monohydric and/or polyhydric aliphatic or cycloaliphatic alcohols containing up to 10 carbon atoms and/or urethanes formed in situ from such alcohols and part of the starting isocyanate are used as the co-catalysts.

8. A process as claimed in claims 1 to 7, characterized in that the reaction is carried out at a temperature in the range from 10 to 60 °C.

9. Compounds containing uretdione groups obtainable in accordance with claims 1 to 8.

10. The use of the compounds based on organic polyisocyanates containing uret-dione groups obtainable in accordance with claims 1 to 8 as starting material in the production of polyurethane plastics by the isocyanate polyaddition process.

## Revendications

1. Procédé de préparation de composés contenant des groupes uret-dione par dimérisation d'une partie au moins des groupes isocyanate d'isocyanates organiques en présence de composés contenant des liaisons phosphore-azote en tant que catalyseurs de dimérisation, caractérisé en ce que l'on effectue la réaction en présence de 0,1 à 5 % en poids, par rapport à l'isocyanate organique, de composés organiques à H actif ayant une valeur de pKa d'au moins 6 et portant au moins un atome d'hydrogène fixé

sur l'oxygène, le soufre ou l'azote, en tant que catalyseurs auxiliaires, sous réserve que les isocyanates organiques répondant à la formule

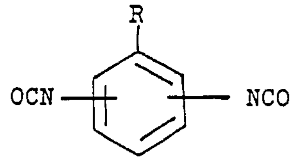

dans laquelle R représente un radical hydrocarboné aliphatique saturé en $C_8$-$C_{15}$ sont exclus.

2. Procédé selon la revendication 1, caractérisé en ce que l'on utilise en tant que catalyseurs auxiliaires des composés choisis dans le groupe consistant en les alcools, les phénols, les amines primaires, les amines secondaires, les amides, les oximes, les composés d'addition de ces composés sur des isocyanates organiques et les mélanges de ces composés et/ou produits de réaction.

3. Procédé selon les revendications 1 et 2, caractérisé en ce que les isocyanates organiques soumis à dimérisation partielle ou totale sont des polyisocyanates organiques.

4. Procédé selon les revendications 1 à 3, caractérisé en ce que les isocyanates organiques soumis à dimérisation partielle ou totale sont des diisocyanates à groupe isocyanate à liaisons aliphatiques.

5. Procédé selon les revendications 1 à 4, caractérisé en ce que l'isocyanate organique soumis à dimérisation partielle ou totale est le 1,6-diisocyanatohexane.

6. Procédé selon les revendications 1 à 5, caractérisé en ce que les isocyanates organiques soumis à dimérisation partielle ou totale sont des polyisocyanates et la réaction de dimérisation est interrompue par addition d'un poison de catalyseur lorsqu'on a atteint un taux de dimérisation de 10 à 50 %, après quoi, le cas échéant, l'excès d'isocyanates de départ non converti encore présent dans le mélange de réaction après interruption de la réaction de dimérisation est éliminé du mélange de réaction par distillation.

7. Procédé selon les revendications 1 à 6, caractérisé en ce que l'on utilise en tant que catalyseurs des composés de formule générale.

$$P(NR_2)_3$$

dans laquelle les symboles R représentent des radicaux hydrocarbonés aliphatiques identiques ou différents en $C_1$-$C_4$ ou bien les deux groupes R forment ensemble et avec l'atome d'azote un noyau hétérocyclique de 3 à 6 chaînons, et en tant que catalyseurs auxiliaires des alcools aliphatiques ou cycloaliphatiques mono- et/ou polyvalents contenant jusqu'à 10 atomes de carbone et/ou des uréthannes formés in situ à partir de ces alcools et d'une partie de l'isocyanate de départ.

8. Procédé selon les revendications 1 à 7, caractérisé en ce que l'on effectue la réaction dans un intervalle de température de 10 à 60 °C.

9. Les composés contenant des groupes uret-dione obtenus par un procédé selon les revendications 1 à 8.

10. Utilisation des composés contenant des groupes uret-dione, à base de polyisocyanates organiques, obtenus par un procédé selon les revendications 1 à 8, en tant que matières premières de la préparation de résines synthétiques de polyuréthannes par le procédé de polyaddition des isocyanates.